# EUROPÄISCHE PATENTSCHRIFT

(11) **EP 1 818 136 B1**
(45) Veröffentlichungstag und Bekanntmachung des Hinweises auf die Patenterteilung: **08.04.2009**
(21) Anmeldenummer: 07002348.6
(22) Anmeldetag: 02.02.2007
(51) Int. Cl.: B23Q 1/48

(54) **Werkzeugmaschine und Verfahren zur spanabhebenden Bearbeitung von Werkstücken, insbesondere von metallischen Werkstücken**
Machine tool and method for machining workpieces, in particular metal workpieces
Machine-outil et procédé destiné au traitement par enlèvement de copeaux de pièces usinées, en particulier de pièces usinées métalliques

(30) Priorität: 13.02.2006 DE 102006007700
(43) Veröffentlichungstag der Anmeldung: 15.08.2007
(73) Patentinhaber: STAMA MASCHINENFABRIK GMBH, D-73278 Schlierbach (DE)
(72) Erfinder: Feinauer, Achim, Dr., 73033 Göppingen (DE); Altmann, Thomas, 73111 Lauterstein (DE); Blazek, Pavel, 73277 Owen (DE)
(74) Vertreter: Duhme, Torsten

(56) Entgegenhaltungen:
- EP-A1- 0 949 029
- WO-A-89/11951
- DE-A1- 3 530 479
- DE-C1- 19 635 258
- US-A1- 2002 020 258

## Beschreibung

Die vorliegende Erfindung betrifft eine Werkzeugmaschine zur spanabhebenden Bearbeitung von Werkstücken, insbesondere von metallischen Werkstücken, mit einer Werkzeugspindel zur Aufnahme eines Bearbeitungswerkzeugs und mit zumindest einer Werkstückspindel zur Aufnahme eines Werkstücks, wobei die Werkstückspindel eine Hohlspindel mit einer Durchgangsöffnung und einem Spannmechanismus ist, der an einem ersten Ende der Durchgangsöffnung angeordnet ist, und wobei die Werkstückspindel und die Werkzeugspindel relativ zueinander bewegbar sind, um ein in den Spannmechanismus eingespanntes Werkstück mit einem in der Werkzeugspindel eingespannten Werkzeug zu bearbeiten.

Die Erfindung betrifft ferner ein Verfahren zur spanabhebenden Bearbeitung von Werkstücken, insbesondere von metallischen Werkstücken, mit den Schritten:
- Einspannen eines Werkstücks in eine Werkstückspindel mit einer Durchgangsöffnung und einem Spannmechanismus, der an einem ersten Ende der Durchgangsöffnung angeordnet ist, und
- Bearbeiten des Werkstücks an zumindest einer Werkstückseite, die aus der Werkstückspindel herausragt, mit einem in einer Werkzeugspindel eingespannten Bearbeitungswerkzeug.

Eine solche Werkzeugmaschine und ein entsprechendes Verfahren sind aus DE 196 35 258 C1 bekannt.

Bei der bekannten Werkzeugmaschine ist die Werkzeugspindel an einem Fahrständer angeordnet, der in drei zueinander senkrechten Raumachsen verfahren werden kann. Die Werkzeugspindel zeigt dabei mit ihrem Werkzeug nach unten. Unterhalb der Werkzeugspindel ist die Werkstückspindel in einer Brücke verschwenkbar gelagert, so dass die Werkstückspindel sowohl in eine horizontale als auch in eine vertikale Position gebracht werden kann. Die Werkstückspindel ist so ausgebildet, dass eine Werkstückstange von hinten durch die Werkstückspindel vorgeschoben werden kann, bis das vordere Ende der Werkstückstange aus der Werkstückspindel herausragt. Das vordere Ende kann dann mit einem in der Werkzeugspindel eingespannten Werkzeug bearbeitet werden. Besonders vorteilhaft lässt sich diese bekannte Werkzeugmaschine einsetzen, um eine Vielzahl von Werkstücken "von der Stange" herzustellen.

Um auch das in der Werkstückspindel eingespannte Ende eines Werkstücks zu bearbeiten (Bearbeitung der so genannten sechsten Seite), schlägt DE 196 35 258 C1 eine zusätzliche Greif- und Schwenkeinheit vor, die gegenüber von der Werkstückspindel angeordnet ist. Die Greif- und Schwenkeinheit kann ein teilbearbeitetes Werkstück aus der Werkstückspindel übernehmen, so dass die sechste Seite dann zugänglich ist. Mit einer solchen Werkzeugmaschine ist eine 6-Seiten-Bearbeitung eines Werkstücks möglich, wobei das Werkstück nur einmal umgespannt werden muss. Dies ist von Vorteil, weil jedes Umspannen aufgrund von Lagetoleranzen die Bearbeitungsgenauigkeit beeinträchtigen kann. Außerdem kostet jedes Umspannen Zeit, was die Produktivität beeinträchtigt.

Um die Vorteile der bekannten Werkzeugmaschine so gut wie möglich auszunutzen, ist es erforderlich, die ersten fünf Seiten des Werkstücks möglichst vollständig zu bearbeiten, bevor das Werkstück zur Bearbeitung der sechsten Seite umgespannt wird. Dies kann bei komplexen Werkstücken Schwierigkeiten bereiten, bspw. wenn durch die Bearbeitung der sechsten Seite Grate an schon bearbeiteten Werkstückseiten entstehen. In solchen Fällen muss das Werkstück entgegen der ursprünglichen Idee ein zweites Mal umgespannt werden, oder es ist eine separate Nachbearbeitung erforderlich.

Vor diesem Hintergrund ist es eine Aufgabe der vorliegenden Erfindung, eine Werkzeugmaschine und ein Verfahren der eingangs genannten Art dahingehend weiterzubilden, dass komplexe Werkstücke, die vielfältige Bearbeitungsschritte erfordern, noch einfacher, schneller und genauer hergestellt werden können.

Gemäß einem Aspekt der Erfindung wird diese Aufgabe durch eine Werkzeugmaschine der eingangs genannten Art gelöst, bei der die Werkstückspindel so ausgebildet ist, dass das in dem Spannmechanismus gehaltene Werkstück durch die Durchgangsöffnung hindurch mit dem in der Werkzeugspindel eingespannten Bearbeitungswerkzeug bearbeitet werden kann.

Nach einem anderem Aspekt der Erfindung wird diese Aufgabe durch ein Verfahren der eingangs genannten Art gelöst, bei dem das Werkstück außerdem durch die Durchgangsöffnung hindurch mit dem in der Werkzeugspindel eingespannten Bearbeitungswerkzeug bearbeitet wird.

Der neuen Werkzeugmaschine und dem neuen Verfahren liegt also die Idee zugrunde, eine Bearbeitung des eingespannten Werkstücks durch die Werkstückspindel hindurch, gewissermaßen also von hinten, zu ermöglichen. Das Werkstück wird vom zweiten Ende der Werkstückspindel her und somit durch die Werkstückspindel hindurch mit dem Bearbeitungswerkzeug angefahren. Damit ist eine Bearbeitung der an sich in der Werkstückspindel verborgen liegenden Endseite möglich. Es kann also bspw. ein Kanal von hinten durch das Werkstück gebohrt werden, wobei die Bohrnadel dann an derjenigen Seite des Werkstücks austritt, die aus der Werkstückspindel herausragt. Ebenso kann die eingespannte Endseite des Werkstücks von Graten befreit werden. Darüber hinaus kann das in der Werkstückspindel gehaltene Werkstück grundsätzlich natürlich auch von vorne, wie üblich, und an den nach vorne aus der Spindel herausragenden Seiten bearbeitet werden. Ein besonderer Aspekt ist jedoch, dass das Werkstück zusätzlich auch an seiner Rückseite bearbeitet werden kann, die bei konventioneller Bearbeitung in der Spindel-liegt öder zumindest von der Spindel verdeckt wird. Damit unterscheiden sich die neue Werkzeugmaschine und das neue Verfahren von herkömmlichen Bearbeitungsprinzipien, die ein Werkstück nur an einem Ende bearbeiten können, und auch von Verfahren, bei denen ein Werkstück mittig gespannt wird, um auf diese Weise zwei Endseiten zu bearbeiten (sogenannter Mittenantrieb, z.B. für die Bearbeitung von langen Wellen).

Die neue Werkzeugmaschine und das neue Verfahren bieten somit eine größere Flexibilität bei der Bearbeitung von Werkstücken, die insbesondere der Bearbeitung von komplexen Werkstücken zugute kommt, die eine Vielzahl von Bearbeitungsschritten an verschiedenen Werkstückseiten erfordern. Das Werkstück kann aufgrund der Erfindung in einer Weise bearbeitet werden, die bislang nicht möglich war, ohne das Werkstück (erneut) umzuspannen. Die neue Werkzeugmaschine und das neue Verfahren erlauben somit eine weitere Reduzierung der Umspannvorgänge. Dadurch lässt sich die Bearbeitungsgenauigkeit weiter erhöhen und die Bearbeitungszeit lässt sich weiter reduzieren.

Die neue Werkzeugmaschine und das neue Verfahren ermöglichen insgesamt eine einfachere, schnellere und genauere Bearbeitung von Werkstücken. Die oben genannte Aufgabe ist vollständig gelöst.

In einer bevorzugten Ausgestaltung der Erfindung verläuft die Durchgangsöffnung koaxial zu einer Drehachse der Werkstückspindel.

Alternativ hierzu könnte die Durchgangsöffnung auch versetzt zu der Drehachse der Werkstückspindel liegen, oder die Durchgangsöffnung könnte schräg oder quer zur Drehachse der Werkstückspindel verlaufen, um einen entsprechenden Zugang zu dem eingespannten Werkstück zu ermöglichen. Die bevorzugte Ausgestaltung lässt sich demgegenüber relativ einfach und kostengünstig realisieren und sie ermöglicht einen flexiblen Zugriff auf das eingespannte Werkstück, der weitgehend unabhängig von der Drehstellung der Werkstückspindel um ihre Drehachse ist.

In einer weiteren Ausgestaltung weist die Werkstückspindel eine Spindellänge in Richtung der Durchgangsöffnung sowie einen äußeren Spindeldurchmesser auf, wobei die Spindellänge in etwa gleich oder kleiner als der äußere Spindeldurchmesser ist.

In dieser Ausgestaltung besitzt die Werkstückspindel eine relativ kurze, gedrungene Bauform, die ggf. zu Lasten des Außendurchmessers der Werkstückspindel gehen kann. Mit anderen Worten ist die Werkstückspindel so ausgebildet, dass sie in Richtung ihrer Durchgangsöffnung möglichst kurzbauend ist. Die Ausgestaltung besitzt den Vorteil, dass die Bearbeitung des eingespannten Werkstücks von der Rückseite her mit relativ kurzen Werkzeugen erfolgen kann, die eine höhere Stabilität und damit eine höhere Bearbeitungsgenauigkeit bieten. Durch die kurze und gedrungene Bauform ist es sogar möglich, ein Werkstück von hinten zu bearbeiten, das außerhalb bzw. vor der Werkstückspindel eingespannt ist.

In einer weiteren Ausgestaltung ist die Werkstückspindel als Drehspindel ausgebildet.

Diese Ausgestaltung beinhaltet, dass die Werkstückspindel in der Lage ist, Drehzahlen und Drehmomente zu erzeugen, die für eine Drehbearbeitung von vorzugsweise metallischen Werkstücken erforderlich sind. In einem bevorzugten Ausführungsbeispiel bietet die Werkstückspindel Drehzahlen bis zu 1000 Umdrehungen pro Minute (oder mehr) und ein maximales Drehmoment im Bereich zwischen 50 und 200 Nm. Durch diese Ausgestaltung wird die Flexibilität bei der Bearbeitung eines Werkstücks weiter erhöht, weil das Werkstück in der vorhandenen Aufspannung auch drehbearbeitet werden kann, einschließlich einer Drehbearbeitung der in der Werkstückspindel eingespannten Werkstückseite. Dementsprechend lassen sich in dieser Ausgestaltung sehr komplexe Werkstücke flexibel und mit einer hohen Genauigkeit herstellen.

In einer weiteren Ausgestaltung besitzt die Durchgangsöffnung an dem ersten Ende einen ersten Innendurchmesser und an einem zweiten Ende einen zweiten Innendurchmesser, wobei der erste Innendurchmesser wesentlich kleiner ist als der zweite Innendurchmesser. In einem bevorzugten Ausführungsbeispiel liegt der zweite Innendurchmesser der Durchgangsöffnung (an dem zweiten Ende) im Bereich zwischen etwa 15 cm und etwa 30 cm.

Diese Ausgestaltung ermöglicht ein tiefes Eintauchen der Werkzeugspindel mit einem Bearbeitungswerkzeug in die Werkstückspindel, so dass noch kürzere und entsprechend stabilere Bearbeitungswerkzeuge verwendet werden können. Besonders bevorzugt ist es, wenn der Innendurchmesser der Durchgangsöffnung an dem zweiten Ende der Werkstückspindel der Außenkontur der Werkzeugspindel in etwa angepasst ist, um ein optimales Eintauchen der Werkzeugspindel in die Werkstückspindel zu ermöglichen.

In einer weiteren Ausgestaltung ist die Werkstückspindel um eine Schwenkachse verschwenkbar gelagert. Vorzugsweise liegt die Schwenkachse etwa mittig zur Werkstückspindel. Des Weiteren ist es bevorzugt, wenn der relative Schwenkbereich der Werkstückspindel (bezogen auf die Werkzeugspindel) zumindest 180° beträgt.

Diese Ausgestaltungen erleichtern die Bearbeitung eines in der Werkstückspindel eingespannten Werkstücks mit Hilfe der Werkzeugspindel, und sie ermöglichen eine flexible Bearbeitung innerhalb eines relativ kleinen Bewegungsbereichs der Maschine. Wenn die Werkstückspindel relativ zu der Werkzeugspindel um zumindest 180° schwenkbar ist, können sowohl die aus der Werkstückspindel herausragenden Seiten des Werkstücks als auch die in der Werkstückspindel liegenden oder zu der Werkstückspindel hinweisenden (Rück-)Seiten des Werkstücks in einer Aufspannung bearbeitet werden.

In einer weiteren Ausgestaltung ist eine weitere Werkstückspindel vorgesehen, die relativ zu der zumindest einen Werkstückspindel bewegbar ist, um ein teilbearbeitetes Werkstück von einer Werkstückspindel zur anderen zu übergeben.

In dieser Ausgestaltung besitzt die neue Werkzeugmaschine zumindest drei Spindeln, nämlich eine Werkzeugspindel und zwei relativ dazu bewegliche Werkstückspindeln. Die Ausgestaltung ermöglicht eine flexible 6-Seiten-Bearbeitung eines Werkstücks mit nur einem Umspannvorgang, der durch die direkte Übergabe von der einen Werkstückspindel zur anderen mit einer sehr hohen Positioniergenauigkeit durchgeführt werden kann.

In einer weiteren Ausgestaltung ist die zweite Werkstückspindel eine Hohlspindel zur Aufnahme und Bearbeitung von stangenförmigen Werkstücken.

Diese Ausgestaltung ist für sich genommen von der eingangs beschriebenen Werkzeugmaschine bekannt. Sie ist jedoch in Verbindung mit der vorliegenden Erfindung besonders vorteilhaft, weil die an sich schon hohe Bearbeitungsgenauigkeit und -geschwindigkeit der bekannten Maschine durch die vorliegende Erfindung noch weiter gesteigert werden kann. Darüber hinaus ist es grundsätzlich denkbar, ein stangenförmiges Werkstück auch schon in der zweiten Werkstückspindel an der eingespannten Rückseite zu bearbeiten, wodurch die Flexibilität noch weiter erhöht ist. Ganz generell kann die zweite Werkstückspindel jedoch auch zur Bearbeitung von nicht-stangenförmigen Werkstücken, beispielsweise zur Bearbeitung von Guß- oder Schmiedeteilen ausgebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte, schematische Darstellung eines bevorzugten Ausführungsbeispiels der neuen Werkzeugmaschine,
- Fig. 2: die Werkzeugmaschine aus Fig. 1 in einer anderen Arbeitsposition,
- Fig. 3: die Werkzeugspindel und eine erfindungsgemäße Werkstückspindel der Werkzeugmaschine aus Fig. 1 und 2 in einer teilweise geschnittenen, vergrößerten Detailansicht, und
- Fig. 4: die Werkzeugspindel und die Werkstückspindel aus Fig. 3 in einer zweiten Arbeitsposition.

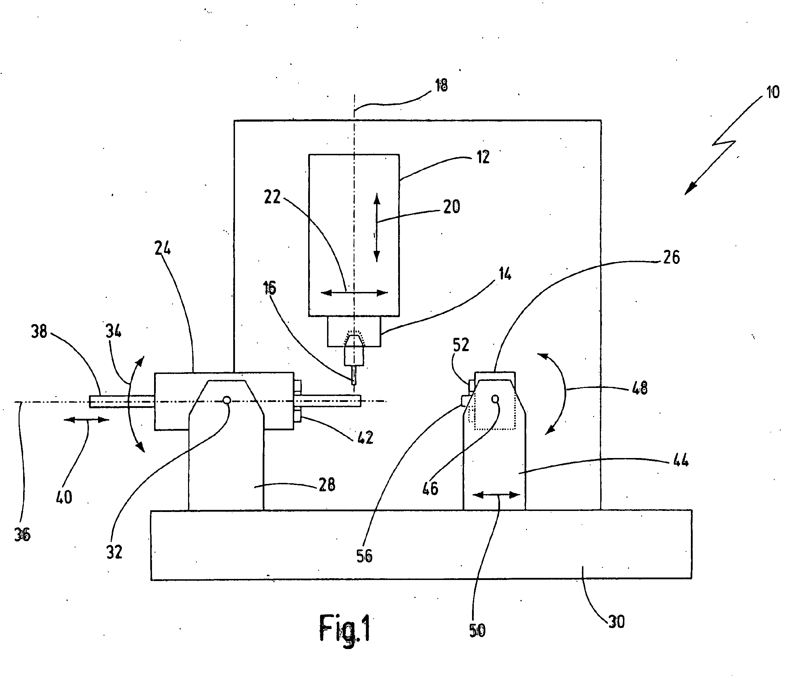

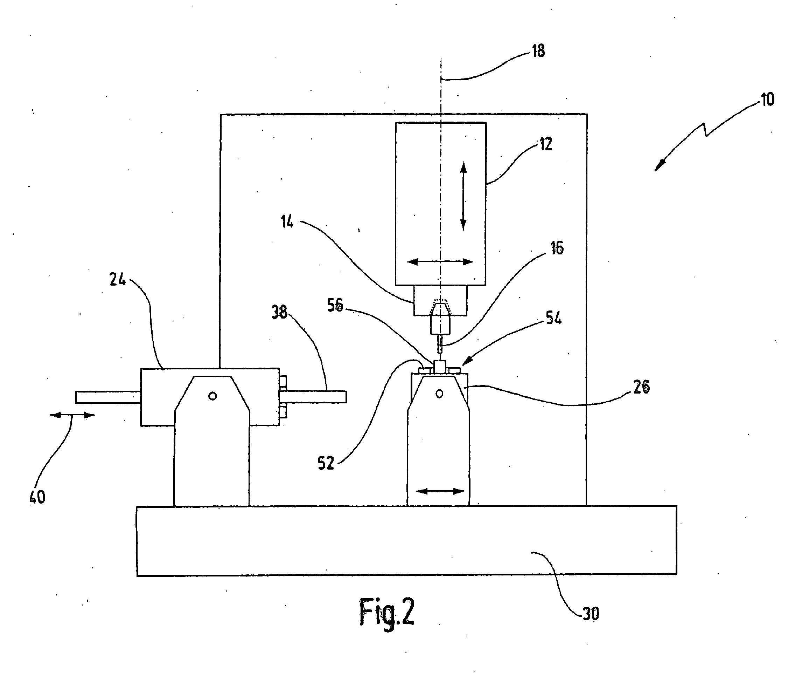

In Fig. 1 und 2 ist ein Ausführungsbeispiel der neuen Werkzeugmaschine in seiner Gesamtheit mit der Bezugsziffer 10 bezeichnet. Die Werkzeugmaschine 10 besitzt hier eine erste Spindeleinheit 12 mit einer Werkzeugspindel 14, in der ein Bearbeitungswerkzeug 16 eingespannt ist. Bei dem Bearbeitungswerkzeug 16 handelt es sich bspw. um einen Fräskopf oder eine Bohrnadel, die mit Hilfe der Werkzeugspindel 14 in eine Rotationsbewegung um die Spindelachse 18 versetzt werden. Alternativ hierzu kann das Bearbeitungswerkzeug bspw. ein Drehmeißel sein, um bei stehender Werkzeugspindel eine Drehbearbeitung an einem Werkstück auszuführen. Darüber hinaus können auch anderen Bearbeitungswerkzeuge, die für eine spanabhebende Bearbeitung von vorzugsweise metallischen Werkstücken benötigt werden, in die Werkzeugaufnahme der Werkzeugspindel 14 eingespannt werden.

Die Spindeleinheit 12 ist in Richtung der Pfeile 20 und 22 sowie in einer Richtung senkrecht zur Zeichenebene verfahrbar. Dementsprechend kann die Spindeleinheit 12 in drei zueinander senkrechten Raumrichtungen verfahren werden, die üblicherweise als x-, y- und z-Richtung bezeichnet werden. In dem bevorzugten Ausführungsbeispiel ist die erste Spindeleinheit 12 an einem Fahrständer angeordnet, der die Bewegungen in den drei Raumrichtungen x, y, und z ausführt. Alternativ hierzu kann die Spindeleinheit 12 jedoch auch anderweitig gelagert sein, bspw. an einer Brücke oder an einer Hexapodenanordnung. Darüber hinaus kann die Spindeleinheit 12 in einer oder mehreren Bewegungsrichtungen starr sein, wenn die Werkzeugspindel (oder ein anderer Werkzeugträger) relativ zu der Spindeleinheit verfahrbar ist.

Die Werkzeugmaschine 10 besitzt ferner eine erste Werkstückspindel 24 und eine zweite Werkstückspindel 26, die jeweils als Werkstückträger fungieren. Die Werkstückspindel 24 ist in einer Brücke 28 gelagert, die ortsfest auf einem Maschinenbett 30 angeordnet ist. Die Werkstückspindel 24 kann in der Brücke 28 um eine Schwenkachse 32 verschwenkt werden, d.h. in Richtung des Doppelpfeils 34. Darüber hinaus ist die Werkstückspindel 24 um ihre Spindelachse 36 drehbar. In einem bevorzugten Ausführungsbeispiel ist die erste Werkstückspindel 24 als Drehspindel ausgebildet, d.h. sie ist in der Lage, Drehzahlen und Drehmomente aufzubringen, die eine Drehbearbeitung eines Werkstücks mit einem in der Werkzeugspindel 14 eingespannten Drehwerkzeug ermöglicht.

Mit der Bezugsziffer 38 ist eine Werkstückstange bezeichnet, die in Richtung des Pfeils 40 von hinten durch die Werkstückspindel 24 vorgeschoben wird, bis das vordere Ende der Werkstückstange 38 aus der Werkstückspindel 24 herausragt. Am vorderen Ende der Werkstückspindel 24 ist ein Spannmechanismus 42 angeordnet, mit dem das vordere Ende der Werkstückstange 38 in der Werkstückspindel 24 drehfest eingespannt wird. Beispielsweise handelt es sich hier um ein Mehrbacken-Spannfutter. Es versteht sich, dass die Werkstückspindel 24 als Hohlspindel ausgebildet ist, um die Werkstückstange 38 nach vorne durchschieben zu können.

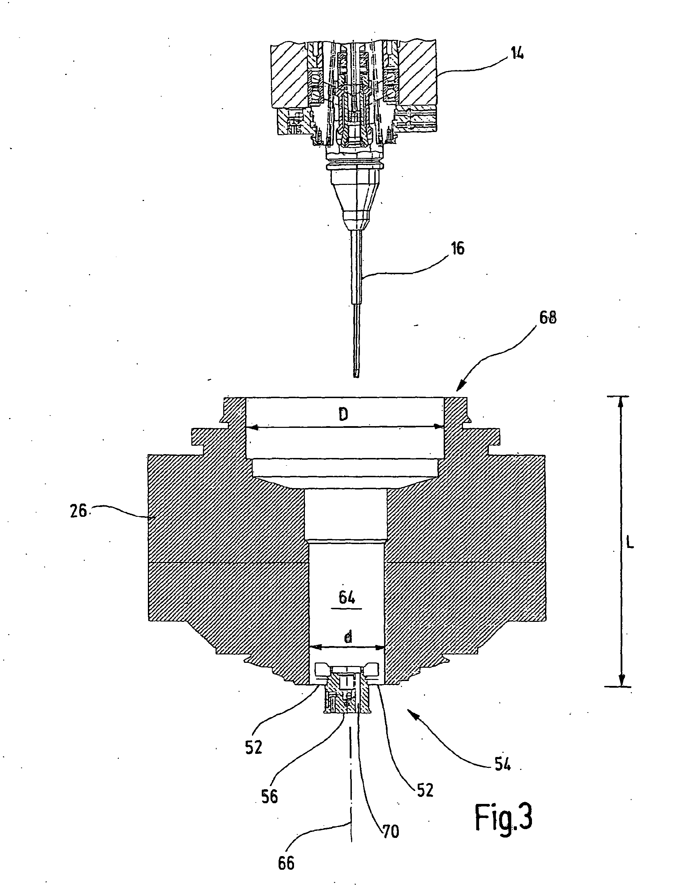

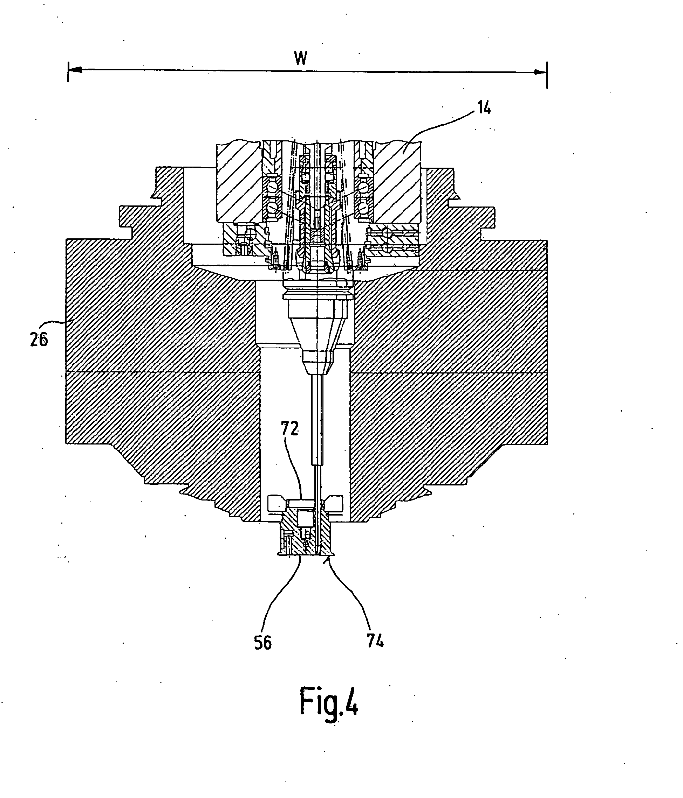

Wie nachfolgend anhand der Figuren 3 und 4 näher erläutert wird, ist die zweite Werkstückspindel 26 ebenfalls als Hohlspindel ausgebildet, wobei diese Eigenschaft bei der zweiten Werkstückspindel 26 in erster Linie dazu dient, ein in der Spindel eingespanntes Werkstück von hinten, also durch die Werkzeugspindel hindurch, zu bearbeiten.

Die zweite Werkstückspindel 26 ist in einer Brücke 44 gelagert und um eine Schwenkachse 46, d.h. in Richtung des Pfeils 48, verschwenkbar. Wie in Fig. 1 dargestellt ist, liegt die Schwenkachse 46 etwa mittig zu der Werkstückspindel 26.

Die Brücke 44 ist auf dem Maschinenbett 30 in Richtung des Doppelpfeils 50 verfahrbar. Hierdurch ist es möglich, die zweite Werkstückspindel 26 so nah an die erste Werkstückspindel 24 heranzubringen, dass ein teilbearbeitetes vorderes Ende der Werkstückstange 38 in den Spannmechanismus 52 am vorderen Ende 54 der Werkstückspindel 26 eingespannt werden kann. Anschließend wird das vordere, teilbearbeitete Ende der Werkstückstange 38 mit einem geeigneten Trennwerkzeug, das vorzugsweise in die Werkzeugaufnahme der Werkzeugspindel 14 eingespannt ist, abgetrennt, und die Werkstückspindel 26 wird in die in Fig. 1 dargestellte Position verfahren, um eine Endbearbeitung des nun von der Stange 38 abgetrennten Werkstücks 56 zu ermöglichen (siehe Fig. 2). Derweil kann die Werkstückstange 38 in der Werkstückspindel 24 weiter in Richtung des Pfeils 40 vorgeschoben werden, um die Bearbeitung des nächsten Werkstücks zu beginnen.

In der in Fig. 2 dargestellten Arbeitsposition kann die sechste Seite des Werkstücks 56 mit Hilfe der Werkzeugspindel 14 in an sich bekannter Weise bearbeitet werden. Vorzugsweise ist auch die zweite Werkstückspindel 26 als Drehspindel ausgebildet, um auch eine Drehbearbeitung an der sechsten Seite des Werkstücks 56 und an den aus der Werkstückspindel 26 herausragenden Umfangsseiten des Werkstücks 56 zu ermöglichen. Dadurch, dass die zweite Werkstückspindel 26 um die Schwenkachse 46 schwenkbar ist, kann das Bearbeitungswerkzeug 16 dem Werkstück 56 unter variabel einstellbaren Winkeln zugestellt werden.

Darüber hinaus ermöglicht die neue Werkzeugmaschine 10 eine vorteilhafte Bearbeitung des in der Werkstückspindel 26 eingespannten Werkstücks 56 von hinten, d.h. durch die Werkstückspindel 26 hindurch. Dies ist nachfolgend anhand der Figuren 3 und 4 näher erläutert.

In Fig. 3 und 4 sind die Werkzeugspindel 14 und die zweite Werkstückspindel 26 mit dem teilbearbeiteten Werkstück 56 in einer teilweise geschnittenen Darstellung gezeigt. Aus Gründen der Übersichtlichkeit sind bei der Werkstückspindel 26 Details, wie bspw. der Spindelrotor, die Lager und die Energie- und Versorgungsleitungen, nicht dargestellt. Darüber hinaus befindet sich die Werkstückspindel 26 in einer Schwenkposition, die gegenüber der Darstellung in Fig. 2 um 180° verschwenkt ist. Mit anderen Worten zeigt das erste Ende 54 der Werkstückspindel 26 hier nach unten, so dass die Werkzeugspindel 14 mit dem Bearbeitungswerkzeug 16 von hinten in die Werkstückspindel 26 einfahren kann (Fig. 4).

Dementsprechend besitzt die Werkstückspindel 26 eine Durchgangsöffnung 64, die hier konzentrisch zur Spindelachse 66 liegt. Die Durchgangsöffnung 64 besitzt am Ende 54 der Werkstückspindel 26 einen Innendurchmesser d, der etwa 8 cm beträgt. Am zweiten Ende 68 besitzt die Durchgangsöffnung 64 einen Innendurchmesser D, der hier etwa 23 cm beträgt. Die Durchgangsöffnung 64 durch die Werkstückspindel 26 weitet sich also vom ersten Ende 54 zum zweiten Ende 68 der Spindel 26 zunehmend auf, wobei die Aufweitung vorzugsweise stufenförmig erfolgt, wie in Fig. 3 und 4 dargestellt ist. Aufgrund des relativ großen Innendurchmessers D am zweiten Ende 68 der Spindel 26 kann die Werkzeugspindel 14 mit dem Bearbeitungswerkzeug 16 weit in die Werkstückspindel 26 eintauchen, wie dies in Fig. 4 dargestellt ist.

Darüber hinaus ist die Werkstückspindel 26 in bevorzugten Ausführungsbeispielen der Erfindung mit einer sehr kurzen Bauform realisiert, um eine Bearbeitung des Werkstücks 56 von hinten durch die Werkstückspindel 26 zu erleichtern. In bevorzugten Ausführungsbeispielen ist die Länge L der Werkstückspindel 26 in Richtung der Durchgangsöffnung 64 in etwa gleich oder sogar kleiner als der äußere Spindeldurchmesser W. In einem bevorzugten Ausführungsbeispiel beträgt die Länge L der Werkstückspindel 26 etwa 30 cm, während der Außendurchmesser W bei etwa 40 cm liegt.

Wie in den Figuren 3 und 4 gezeigt ist, ist die neue Werkzeugmaschine 10 insbesondere in der Lage, eine Bohrung 70 von hinten durch ein teilbearbeitetes Werkstück 56 zu bohren. Des Weiteren kann die in der Werkstückspindel 26 eingespannte Endseite 72 des Werkstücks 56 sehr leicht von Graten befreit werden. Die bei der Bearbeitung anfallenden Späne werden nach dem Zurückfahren der Werkzeugspindel 14 bspw. durch Verschwenken der Werkstückspindel 26 um die Schwenkachse 46 abgeführt.

In einer besonders bevorzugten Variante des neuen Verfahrens wird das Werkstück 56 nach dem Einspannen in der Werkstückspindel 26 nicht nur von hinten durch die Durchgangsöffnung 64 hindurch bearbeitet, sondern auch an den aus der Werkstückspindel 26 hinausragenden Seiten, wie dies beispielhaft in Fig. 2 dargestellt ist. Da das Werkstück 56 auch bei Bearbeitung seiner gegenüberliegenden Endseiten 72, 74 nicht umgespannt werden muss, wird eine sehr hohe Bearbeitungsgenauigkeit erreicht.

## Patentansprüche

1. Werkzeugmaschine zur spanabhebenden Bearbeitung von Werkstücken (56), insbesondere von metallischen Werkstücken, mit einer Werkzeugspindel (14) zur Aufnahme eines Bearbeitungswerkzeugs (16) und mit zumindest einer Werkstückspindel (26) zur Aufnahme eines Werkstücks (56), wobei die Werkstückspindel (26) eine Hohlspindel mit einer Durchgangsöffnung (64) und einem Spannmechanismus (52) ist, der an einem ersten Ende (54) der Durchgangsöffnung (64) angeordnet ist, und wobei die Werkstückspindel (26) und die Werkzeugspindel (14) relativ zueinander bewegbar sind, um ein in den Spannmechanismus (52) eingespanntes Werkstück (56) mit einem in der Werkzeugspindel (14) eingespannten Werkzeug (16) zu bearbeiten, **dadurch gekennzeichnet, dass** die Werkstückspindel (26) so ausgebildet ist, dass das in dem Spannmechanismus (52) gehaltene Werkstück (56) durch die Durchgangsöffnung (64) hindurch mit dem in der Werkzeugspindel (14) eingespannten Bearbeitungswerkzeug (16) bearbeitet werden kann.

2. Werkzeugmaschine nach Anspruch 1, **dadurch gekennzeichnet, dass** die Durchgangsöffnung (64) koaxial zur Drehachse (66) der Werkstückspindel verläuft.

3. Werkzeugmaschine nach Anspruch 1 oder 2, **dadurch gekennzeichnet, dass** die Werkstückspindel (26) eine Spindellänge (L) in Richtung der Durchgangsöffnung (64) sowie einen äußeren Spindeldurchmesser (W) aufweist, wobei die Spindellänge (L) in etwa gleich oder kleiner als der äußere Spindeldurchmesser (W) ist.

4. Werkzeugmaschine nach einem der Ansprüche 1 bis 3, **dadurch gekennzeichnet, dass** die Werkstückspindel (26) als Drehspindel ausgebildet ist.

5. Werkzeugmaschine nach einem der Ansprüche 1 bis 4, **dadurch gekennzeichnet, dass** die Durchgangsöffnung (64) an dem ersten Ende (54) einen ersten Innendurchmesser (d) und an einem zweiten Ende (68) einen zweiten Innendurchmesser (D) besitzt, wobei der erste Innendurchmesser (d) wesentlich kleiner ist als der zweite Innendurchmesser (D).

6. Werkzeugmaschine nach einem der Ansprüche 1 bis 5, **dadurch gekennzeichnet, dass** die Werkstückspindel (26) um eine Schwenkachse (46) verschwenkbar gelagert ist.

7. Werkzeugmaschine nach einem der Ansprüche 1 bis 6, **gekennzeichnet durch** eine weitere Werkstückspindel (24), die relativ zu der zumindest einen Werkstückspindel (26) bewegbar ist, um ein teilbearbeitetes Werkstück (56) von einer Werkstückspindel zur anderen zu übergeben.

8. Werkzeugmaschine nach Anspruch 7, **dadurch gekennzeichnet, dass** die zweite Werkstückspindel (24) eine Hohlspindel zur Aufnahme und Bearbeitung von stangenförmigen Werkstücken (38) ist.

9. Verfahren zur spanabhebenden Bearbeitung von Werkstücken, insbesondere von metallischen Werkstücken, mit den Schritten:
- Einspannen eines Werkstücks (56) in eine Werkstückspindel (26) mit einer Durchgangsöffnung (64) und einem Spannmechanismus (52), der an einem ersten Ende (54) der Durchgangsöffnung (64) angeordnet ist, und
- Bearbeiten des Werkstücks (56) an zumindest einer Werkstückseite, die aus der Werkstückspindel (26) herausragt, mit einem in einer Werkzeugspindel (14) eingespannten Bearbeitungswerkzeug (16),
**dadurch gekennzeichnet, dass** das Werkstück (56) außerdem durch die Durchgangsöffnung (64) hindurch mit dem in der Werkzeugspindel (14) eingespannten Bearbeitungswerkzeug (16) bearbeitet wird.

## Claims

1. A machine tool for the cutting machining of work pieces (56), in particular of metallic work pieces, comprising a tool spindle (14) for receiving a machining tool (16) and comprising at least one work piece spindle (26) for receiving a work piece (56), wherein the work piece spindle (26) is a hollow spindle having a passage opening (64) and a clamping mechanism (52) arranged at a first end (54) of the passage opening (64), and wherein the work piece spindle (26) and the tool spindle (14) are movable relative to one another for machining a work piece (56) arranged in the clamping mechanism (52) by means of a tool (16) arranged in the tool spindle (14), **characterized in that** the work piece spindle (26) is designed such that the work piece (56) held in the clamping mechanism (52) can be machined through the passage opening (64) by means of the machining tool (16) arranged in the tool spindle (14).

2. The machine tool according to Claim 1, **characterized in that** the passage opening (64) extends coaxially with respect to the axis of rotation (66) of the work piece spindle.

3. The machine tool according to Claim 1 or 2, **characterized in that** the work piece spindle (26) has a spindle length (L) in the direction of the passage opening (64) and an outer spindle diameter (W), with the spindle length (L) being approximately equal to or smaller than the outer spindle diameter (W).

4. The machine tool according to any one of Claims 1 to 3, **characterized in that** the work piece spindle (26) is designed as a turning spindle.

5. The machine tool according to any one of Claims 1 to 4, **characterized in that** the passage opening (64) has a first inner diameter (d) at the first end (54) and a second inner diameter (D) at a second end (68), with the first inner diameter (d) being substantially smaller than the second inner diameter (D).

6. The machine tool according to any one of Claims 1 to 5, **characterized in that** the work piece spindle (26) is mounted pivotably about a pivot axis (46).

7. The machine tool according to any one of Claims 1 to 6, **characterized by** a further work piece spindle (24) which is movable relative to the at least one work piece spindle (26) for transferring a partly machined work piece (56) from one work piece spindle to the other.

8. The machine tool according to Claim 7, **characterized in that** the second work piece spindle (24) is a hollow spindle designed for receiving and machining of rod-shaped work pieces (38).

9. A method for the cutting machining of work pieces, in particular of metallic work pieces, comprising the steps:
- chucking a work piece (56) into a work piece spindle (26) having a passage opening (64) and a clamping mechanism (52) arranged at a first end (54) of the passage opening (64), and
- machining at least one side of the work piece (56), which side projects out of the work piece spindle (26), by means of a machining tool (16) arranged in a tool spindle (14),
**characterized in that** the work piece (56) is also machined through the passage opening (64) by means of the machining tool (16) arranged in the tool spindle (14).

## Revendications

1. Machine-outil pour l'usinage par enlèvement de copeaux de pièces (56), en particulier des pièces métalliques, comportant une broche porte-outil (14) destinée à recevoir un outil d'usinage (16) et comportant au moins une broche porte-pièce (26) destinée à recevoir une pièce à usiner (56), la broche porte-pièce (26) étant une broche creuse avec une ouverture de passage (64) et un mécanisme de serrage (52) qui est disposé sur une première extrémité (54) de l'ouverture de passage (64), et la broche porte-pièce (26) et la broche porte-outil (14) étant mobiles l'une par rapport à l'autre afin d'usiner avec un outil (16), monté dans la broche porte-outil (14), une pièce (56), montée dans le mécanisme de serrage (52), **caractérisée en ce que** la broche porte-pièce (26) est réalisée de telle sorte que la pièce (56) maintenue dans le mécanisme de serrage (52) peut être usinée à travers l'ouverture de passage (64) au moyen de l'outil d'usinage (16) monté dans la broche porte-outil (14).

2. Machine-outil selon la revendication 1, **caractérisée en ce que** l'ouverture de passage (64) s'étend coaxialement à l'axe de rotation (66) de la broche porte-pièce.

3. Machine-outil selon la revendication 1 ou 2, **caractérisée en ce que** la broche porte-pièce (26) a une longueur (L) dans la direction de l'ouverture de passage (64), ainsi qu'un diamètre extérieur (W), la longueur (L) de la broche étant sensiblement égale ou inférieure au diamètre extérieur (W) de la broche.

4. Machine-outil selon l'une quelconque des revendications 1 à 3, **caractérisée en ce que** la broche porte-pièce (26) est réalisée sous la forme d'une broche rotative.

5. Machine-outil selon l'une quelconque des revendications 1 à 4, **caractérisée en ce que** l'ouverture de passage (64) possède, au niveau de la première extrémité (54) un premier diamètre intérieur (d) et, au niveau de la deuxième extrémité (68), un deuxième diamètre intérieur (D), le premier diamètre intérieur (d) étant sensiblement inférieur au deuxième diamètre intérieur (D).

6. Machine-outil selon l'une quelconque des revendications 1 à 5, **caractérisée en ce que** la broche porte-pièce (26) est montée de manière à pouvoir pivoter autour d'un axe de pivotement (46).

7. Machine-outil selon l'une quelconque des revendications 1 à 6, **caractérisée par** une autre broche porte-pièce (24) qui est mobile par rapport à ladite au moins une broche porte-pièce (26), en vue de transférer une pièce (56) partiellement usinée depuis une des broches porte-pièce vers l'autre.

8. Machine-outil selon la revendication 7, **caractérisée en ce que** la deuxième broche porte-pièce (24) est une broche creuse destinée à recevoir et à usiner des pièces (38) en forme de barres.

9. Procédé pour l'usinage par enlèvement de copeaux de pièces, en particulier des pièces métalliques, comportant les étapes :
- serrage d'une pièce à usiner (56) dans une broche porte-pièce (26) munie d'une ouverture de passage (64) et d'un mécanisme de serrage (52), qui est disposé sur une première extrémité (54) de l'ouverture de passage (64), et
- usinage de la pièce à usiner (56) sur au moins un côté de la pièce, qui s'avance hors de la broche porte-pièce (26), au moyen d'un outil d'usinage (16) monté dans une broche porte-outil (14),
**caractérisé en ce que** la pièce (56) est usinée, en outre, à travers l'ouverture de passage (64) avec l'outil d'usinage (16) monté dans une broche porte-outil (14).
